# EUROPÄISCHE PATENTANMELDUNG

(11) **EP 2 267 346 A1**
(43) Veröffentlichungstag der Anmeldung: **29.12.2010**
(21) Anmeldenummer: 09008049.0
(22) Anmeldetag: 19.06.2009
(51) Int. Cl.: F16K 17/00, G05D 7/00, G05D 16/00

(54) **Gasarmatur**

(71) Anmelder: RMG Regel + Messtechnik GmbH, 34123 Kassel-Bettenhausen (DE)
(72) Erfinder: Grigorjew, Igor, 34128 Kassel (DE)
(74) Vertreter: Walther, Walther & Hinz GbR

(57) **Zusammenfassung**

Gegenstand der Erfindung ist eine Gasarmatur (1), insbesondere ein Gas-Druckregelgerät, -Mengenregelgerät und Sicherheitsabsperrventil, umfassend ein Stellgliedgehäuse (2) mit einem Ein- und einem Auslass (3, 4), wobei das Stellgliedgehäuse (2) im Übergang vom Einlass zum Auslass mindestens eine Öffnung (5) aufweist, die durch ein im Stellgliedgehäuse (2) beweglich angeordnetes Stellglied (10) verschließbar ist, wobei das Stellglied (10) mit einer Antriebseinrichtung in Verbindung steht, wobei die Antriebseinrichtung rechtwinklig zur Bewegungsrichtung des Stellglieds im Stellgliedgehäuse der Gasarmatur angeordnet ist, wobei die Antriebseinrichtung (20, 120) durch eine Hebeleinrichtung (22) mit dem Stellglied (10) in Verbindung steht.

## Beschreibung

Die vorliegende Erfindung betrifft eine Gasarmatur, insbesondere ein Gas-Druckregelgerät, -Mengenregelgerät und Sicherheitsabsperrventil, umfassend ein Stellgliedgehäuse mit einem Ein- und einem Auslass, wobei das Stellgliedgehäuse im Übergang vom Einlass zum Auslass mindestens eine Öffnung aufweist, die durch ein im Stellgliedgehäuse beweglich angeordnetes Stellglied verschließbar ist, wobei das Stellglied mit einer Antriebseinrichtung in Verbindung steht, wobei die Antriebseinrichtung rechtwinklig zur Bewegungsrichtung des Stellglieds im Stellgliedgehäuse der Gasarmatur angeordnet ist.

Gasarmaturen der eingangs genannten Art sind aus dem Stand der Technik hinreichend bekannt. Solche Gasarmaturen werden in Rohrleitungen eingesetzt mit einem Querschnitt zwischen 100 und 700 bzw. auch bis zu 1200 mm.

Wie bereits eingangs erläutert, besteht eine solche Gasarmatur im Wesentlichen aus einem Stellgliedgehäuse mit einem Stellglied, wobei im Übergang vom Ein- zum Auslass mindestens eine Öffnung, vorzugsweise allerdings mehrere Öffnungen vorgesehen sind, die durch eine Verschiebung des Stellglieds partiell oder vollständig geöffnet oder verschlossen werden können. Zur Bewegung des Stellglieds ist eine Antriebseinrichtung vorgesehen, wobei die Antriebseinrichtung nach dem Stand der Technik unterschiedlich ausgebildet sein kann. Bekannt ist in diesem Zusammenhang ein sogenanntes Kegelradgetriebe, wobei durch das Kegelradgetriebe mit dem motorischen Antrieb, der senkrecht zur Durchflussrichtung auf dem Stellgliedgehäuse angeordnet ist, das Stellglied axial zur Durchflussrichtung beweglich ist. Der Nachteil des Einsatzes solcher Kegelradgetriebe besteht darin, dass diese teuer sind und eine verhältnismäßig geringe Schließgeschwindigkeit aufweisen. In diesem Zusammenhang ist zu erwähnen, dass als Voraussetzung für den Einsatz solcher Gasarmaturen als Sicherheitsabsperrventil, die Rohrleitung in maximal 2 Sek. abgesperrt sein muss.

In diesem Zusammenhang ist ebenfalls eine Gasarmatur bekannt, bei der zwei schräg verlaufende Zahnstangen vorgesehen sind, die im Winkel von 90° zueinander verlaufen. Ein solches Zahnstangengetriebe erfordert leistungsstarke Antriebe, insbesondere pneumatischer Art, da hohe Reibkräfte zu überwinden sind. Die Verwendung von schräg verzahnten Stangen zur Betätigung eines Stellglieds bedingt nicht nur leistungsstarke Antriebe aufgrund der hohen Reibkräfte, sondern verursacht auch einen relativ hohen Verschleiß, eben auch aufgrund der bereits genannten hohen Reibkräfte.

Darüber hinaus ist die Verwendung von Schneckenradgetrieben bekannt, die einerseits teuer sind und andererseits ebenfalls hohe Reibungsverluste erzeugen, mithin auch einem hohen Verschleiß unterliegen.

Die der Erfindung zugrunde liegende Aufgabe besteht demzufolge darin, eine Gasarmatur der eingangs genannten Art bereitzustellen, die in Gasleitungen eingesetzt werden kann, die hohen Drücken bis zu 350 bar unterliegen, und mit der insbesondere bei großen Querschnitten von bis zu 1200 mm die Schließzeit von 2 Sek. nicht überschritten wird.

Die Aufgabe wird erfindungsgemäß dadurch gelöst, dass bei einer Gasarmatur der eingangs genannten Art die Antriebseinrichtung durch eine Hebeleinrichtung mit dem Stellglied in Verbindung steht. Durch eine solche Hebeleinrichtung mithin einer Einrichtung, die rein mechanisch funktioniert, sind nicht nur erhebliche Schließkräfte zu erzeugen, sondern darüber hinaus ist auch die Schließgeschwindigkeit verhältnismäßig hoch, selbst bei Einsatz einer solchen Gasarmatur in Rohrleitungen mit Querschnitten von bis zu 1200 mm.

Vorteilhafte Merkmale und Ausgestaltungen der Erfindung ergeben sich aus den Unteransprüchen.

So ist nach einer Ausführungsform vorgesehen, dass die Hebeleinrichtung mindestens einen Hebel umfasst, wobei vorteilhaft der Hebel mit seinem einen Ende mit der Antriebseinrichtung und mit seinem anderen Ende mit dem Stellglied jeweils schwenkbeweglich verbunden ist.

Nach einer anderen Ausführungsform ist vorgesehen, dass die Hebeleinrichtung zwei nach Art einer Schere miteinander gekoppelte Hebel umfasst. Hierbei sind vorteilhaft die beiden nach Art einer Schere gekoppelten Hebel im Koppelgelenk mit dem Stellglied verbunden. Der Vorteil einer Hebeleinrichtung mit zwei nach Art einer Schere gekoppelten Hebeln gegenüber einer Hebeleinrichtung mit einem einzigen Hebel liegt darin, dass die beim Verstellen des Stellglieds durch den Hebel auf das Stellglied ausgeübten Kräfte, die winklig zur Längsachse des Stellglieds auf das Stellglied wirken, nicht allein durch die Führung des Stellglieds aufgefangen werden, sondern die Kräfte vielmehr durch den zweiten Hebel, der mit dem ersten Hebel nach Art einer Schere verbunden ist, aufgenommen werden und auf die Betätigungsstange übertragen werden.

Nach einer Ausführungsform ist vorgesehen, dass die Antriebseinrichtung eine Betätigungstange umfasst, die in Richtung ihrer Längsachse verschieblich ist und an der der mindestens eine Hebel fest aber schwenkbeweglich angeordnet ist. Bei Verwendung von zwei Hebeln, die nach Art einer Schere miteinander in Verbindung stehen, ist vorgesehen, dass der andere Hebel auf der Betätigungstange verschieblich gelagert ist. Die Lagerung dieses anderen Hebels auf der Betätigungstange erfolgt z. B. durch eine Lagerhülse.

Wie bereits an anderer Stelle erläutert, umfasst die Antriebseinrichtung eine Betätigungstange. Zur Bewegung der Betätigungstange längs ihrer Längsachse ist ein Kolbenzylinderantrieb vorgesehen, der an der Betätigungstange angreift. Das heißt, dass pneumatisch oder hydraulisch die Betätigungstange entlang ihrer Längsachse beweglich durch das Stellgliedgehäuse gehalten ist.

Nach einem besonderen Merkmal der Erfindung ist in Bezug auf diese Ausführungsform vorgesehen, dass der Kolben des Kolbenzylinderantriebs federbelastet ist. Das bedeutet, dass in Offenstellung der Kolben unter der Last der Feder steht, mithin pneumatisch oder hydraulisch der Kolben entgegen der Kraft mindestens einer Feder verschoben wird, so dass dann, wenn es zu einem Druckabfall kommt, aufgrund der Last der Feder die Gasarmatur geschlossen wird. Grundsätzlich besteht auch die Möglichkeit, einen doppelt wirkenden Kolbenzylinderantrieb einzusetzen.

Nach einer anderen Variante ist vorgesehen, dass die Antriebseinrichtung eine Gewindespindel aufweist, an der der mindestens eine Hebel durch eine Spindelmutter in der Längsachse der Spindel verfahrbar und schwenkbeweglich angeordnet ist. Eine solche Spindel-Mutterverbindung ermöglicht bei entsprechender Rotationsgeschwindigkeit der Spindel ebenfalls eine schnelle Schließbewegung, die zudem auch bei hohen Drücken einsetzbar ist. In Verbindung mit dieser Ausführungsform ist bei der Verwendung zweier Hebel, die nach Art einer Schere miteinander verbunden sind, vorgesehen, dass dieser andere Hebel an der Spindel längs beweglich angeordnet ist. Dies kann zum einen dadurch bewerkstelligt sein, dass der andere Hebel durch eine Gleithülse mit der Spindel verbunden ist, oder aber dadurch, dass dieser Hebel ebenfalls durch eine Mutter mit der Spindel in Verbindung steht, um dann durch ein entsprechend gegengeläufiges Gewinde bei Drehung der Spindel zu bewirken, dass die beiden Hebel auf der Spindel aufeinander zulaufen. Zum Antrieb der Spindel ist ein Motor, insbesondere ein Elektromotor, vorgesehen.

Das Stellglied ist nach einem bevorzugten Merkmal der Erfindung als im Stellgliedgehäuse verschiebliche Hülse ausgebildet, wobei dieses Stellglied vorteilhaft mittig eine Achse zur Anbindung an den mindestens einen Hebel aufweist. Die Achse ist hierbei mit dem mindestens einen Hebel ebenfalls schwenkbeweglich verbunden.

Anhand der Zeichnungen wird die Erfindung nachstehend beispielhaft näher erläutert.
- Fig. 1: zeigt die erfindungsgemäße Gasarmatur im geöffneten Zustand mit einer Betätigungstange;
- Fig. 2: zeigt eine Darstellung gemäß Fig. 1 im geschlossenen Zustand;
- Fig. 3: zeigt eine Darstellung einer Gasarmatur gemäß Fig. 1 mit einem Spindel-Mutterantrieb im geöffneten Zustand;
- Fig. 4: zeigt eine Darstellung gemäß Fig. 3 im geschlossenen Zustand des Stellglieds.

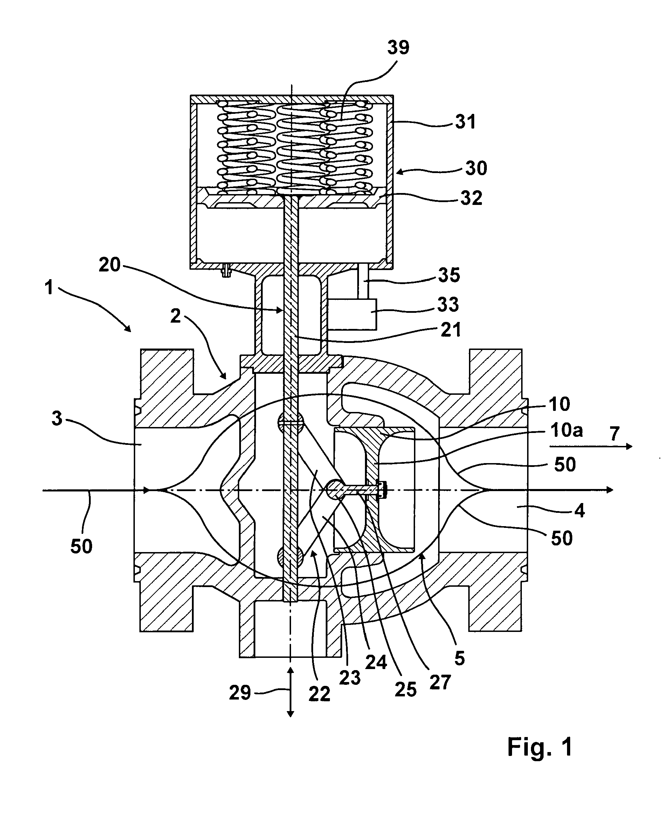

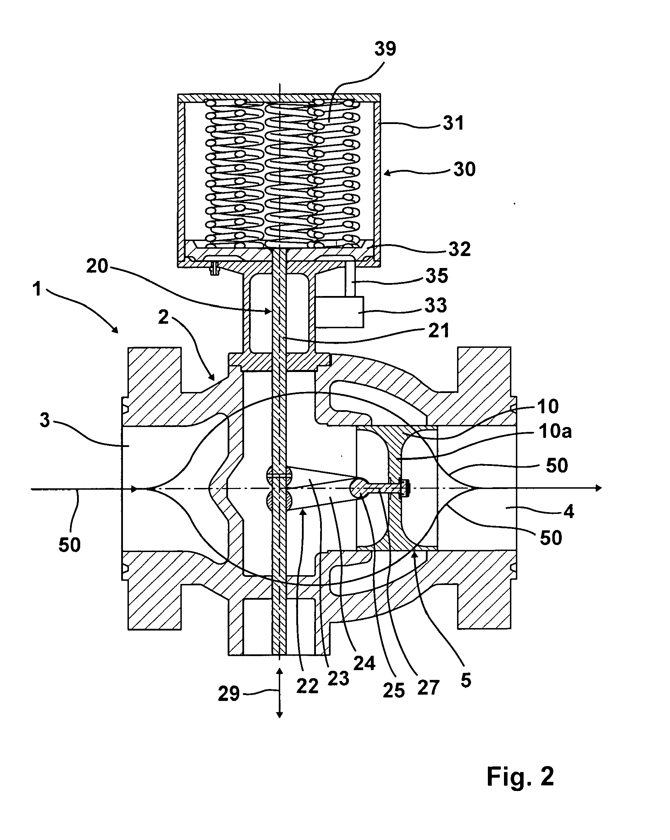

Die mit 1 bezeichnete Gasarmatur, die im vorliegenden Fall als Gasdruckregelventil ausgebildet ist, besitzt das Stellgliedgehäuse 2, wobei das Stellgliedgehäuse 2 einen Einlass 3 und einen Auslass 4 aufweist. Der Strömungsverlauf des Gases durch die Gasarmatur ist durch den Verlauf des Pfeiles 50 gekennzeichnet. Im Bereich zwischen Einlass 3 und Auslass 4 ist eine Öffnung 5 vorgesehen, die durch das insgesamt mit 10 bezeichnete Stellglied partiell oder vollständig verschließbar ist, wenn das Stellglied 10 aus der Stellung gemäß Fig. 1 in Richtung des Pfeiles 7 in die Stellung gemäß Fig. 2 überführt wird. Zur Verschiebung des Stellglieds 10 ist die insgesamt mit 20 bezeichnete Antriebseinrichtung vorgesehen. Die Antriebseinrichtung umfasst nach der Darstellung gemäß der Ausführungsform der Fig. 1 und 2 die Betätigungstange 21, die im Stellgliedgehäuse 2 axial beweglich gelagert ist, und die Kolbenzylindereinrichtung 30. Die Betätigungstange 21 weist das nach Art einer Schere ausgebildete Hebelpaar 22 mit den Hebeln 23 und 24 auf, wobei der Hebel 23 an der Betätigungstange durch eine Hülse (nicht dargestellt) fest, aber schwenkbeweglich angeordnet ist, wohingegen der Hebel 24 durch eine Hülse auf der Betätigungstange 21 axial beweglich und schwenkbeweglich angeordnet ist. Gekoppelt sind die beiden Hebel 23 und 24 im Koppelgelenk 25 drehbeweglich und durch die Achse 27 oder unmittelbar mit dem Stellglied 10 verbunden. Das hülsenförmige Stellglied 10 umfasst hierbei einen inneren Teller, Boden 10a oder Speichen der bzw. die zur Anbindung der Achse 27 dienen. Die Bewegung der Betätigungstange 21 in Richtung des Doppelpfeiles 29 erfolgt über den Kolbenzylinderantrieb 30. Der Kolbenzylinderantrieb 30 umfasst den Zylinder 31 und den Kolben 32, wobei der Kolben 32 durch einen Stellungsregler 33 angesteuert wird, indem der Stellungsregler 33 mit dem Zylinder 31 durch eine Leitung 35 in Verbindung steht.

Der Kolben 32 steht unter der Last der Federn 39, die dafür sorgen, dass das Stellglied in dem Moment, wo der Zylinderraum unter dem Kolben 32 drucklos ist, die Öffnungen 5 verschließt.

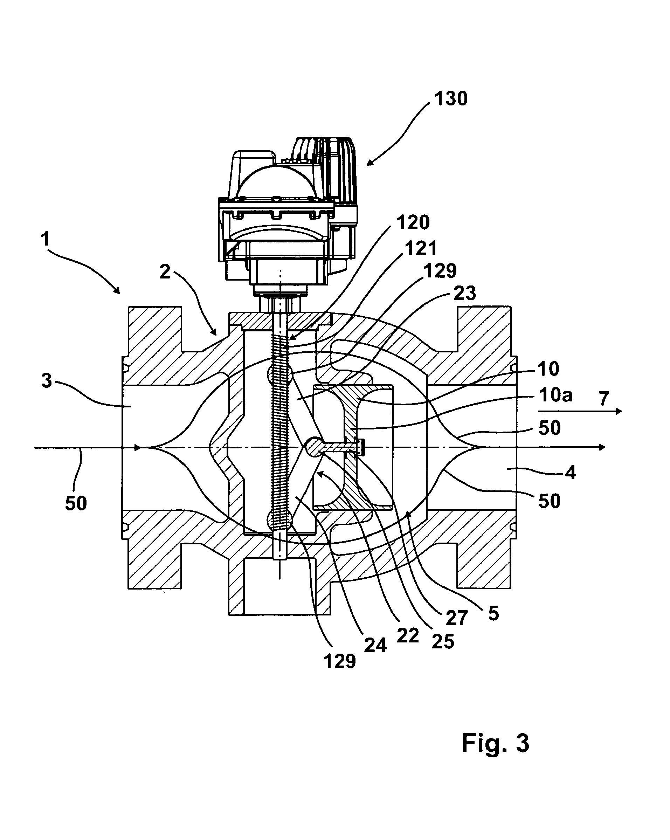

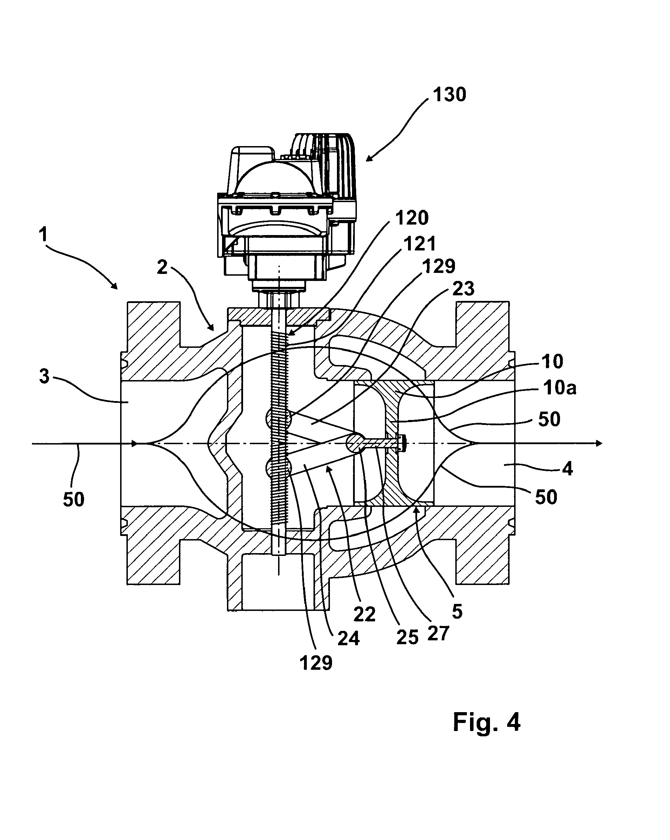

Die Ausführungsform gemäß den Fig. 3 und 4 unterscheidet sich der gemäß den Fig. 1 und 2 lediglich durch den Antrieb. Bei der Ausführungsform gemäß den Fig. 3 und 4 ist ein Antrieb in Form eines Spindel-Mutterantriebes 120 vorgesehen, wobei die Gewindespindel 121 mit dem Hebel 23 durch eine Gewindemutter 129 drehbar in Verbindung steht und radial und axial gelagert ist. Der andere Hebel 24 kann auf der Spindel 121 entweder durch eine Gleithülse entlang der Spindel gelagert sein oder es besteht die Möglichkeit, dass der Hebel 24 ebenfalls eine Spindelmutter 129 aufweist, wobei durch ein entsprechendes gegenläufiges Gewinde die beiden Hebel 23 und 24 des Hebelpaares 22 in die Stellung gemäß Fig. 4 überführt werden können. Die Gewindespindel 121 weist endseitig einen elektrischen Antrieb 130 auf, durch den die Drehung der Gewindespindel erfolgt. Da die Gasarmatur ansonsten im Wesentlichen der Gasarmatur gemäß den Fig. 1 und 2 entspricht, sind die Bezugszeichen übernommen worden, weshalb zur Beschreibung der einzelnen Teile auf die Beschreibung zu den Fig. 1 und 2 Bezug genommen wird.

## Patentansprüche

1. Gasarmatur (1), insbesondere Gas-Druckregelgerät-Mengenregelgerät und Sicherheitsabsperrventil, umfassend ein Stellgliedgehäuse (2) mit einem Ein- und einem Auslass (3, 4), wobei das Stellgliedgehäuse (2) im Übergang vom Einlass zum Auslass mindestens eine Öffnung (5) aufweist, die durch ein im Stellgliedgehäuse (2) beweglich angeordnetes Stellglied (10) verschließbar ist, wobei das Stellglied (10) mit einer Antriebseinrichtung in Verbindung steht, wobei die Antriebseinrichtung rechtwinklig zur Bewegungsrichtung des Stellglieds im Stellgliedgehäuse der Gasarmatur angeordnet ist,
**dadurch gekennzeichnet,**
**dass** die Antriebseinrichtung (20, 120) durch eine Hebeleinrichtung (22) mit dem Stellglied (10) in Verbindung steht.

2. Gasarmatur nach Anspruch 1,
**dadurch gekennzeichnet,**
**dass** die Hebeleinrichtung (22) mindestens einen Hebel (23) umfasst.

3. Gasarmatur nach Anspruch 2,
**dadurch gekennzeichnet,**
**dass** der Hebel(23) mit seinem einen Ende mit der Antriebseinrichtung (20, 120) und mit seinem anderen Ende mit dem Stellglied (10) jeweils schwenkbeweglich verbunden ist.

4. Gasarmatur nach einem der voranstehenden Ansprüche,
**dadurch gekennzeichnet,**
**dass** die Hebeleinrichtung (22) zwei nach Art einer Schere miteinander gekoppelte Hebel (23, 24) umfasst.

5. Gasarmatur nach Anspruch 4
**dadurch gekennzeichnet,**
**dass** die beiden nach Art einer Schere gekoppelten Hebel (23, 24) im Koppelgelenk (25) mit dem Stellglied (10) verbunden sind.

6. Gasarmatur nach einem der voranstehenden Ansprüche,
**dadurch gekennzeichnet,**
**dass** die Antriebseinrichtung eine Betätigungstange (21) umfasst, die in Richtung ihrer Längsachse verschieblich ist und an der der mindestens eine Hebel (23, 24) schwenkbeweglich aber fest angeordnet ist.

7. Gasarmatur nach Anspruch 6
**dadurch gekennzeichnet,**
**dass** der andere Hebel (23, 24) auf der Betätigungstange (21) verschieblich angeordnet ist.

8. Gasarmatur nach Anspruch 6,
**dadurch gekennzeichnet,**
**dass** die Betätigungstange (21) mit einem Kolbenzylinderantrieb (30) in Verbindung steht.

9. Gasarmatur nach Anspruch 8,
**dadurch gekennzeichnet,**
**dass** der Kolben (32) des Kolbenzylinderantriebs (30) federbelastet ist.

10. Gasarmatur nach einem der voranstehenden Ansprüche,
**dadurch gekennzeichnet,**
**dass** die Antriebseinrichtung (120) eine Gewindespindel (121) aufweist, an der der mindestens eine Hebel (23, 24) durch eine Spindelmutter (129) in der Längsachse der Gewindespindel (121) verfahrbar und schwenkbeweglich angeordnet ist.

11. Gasarmatur nach Anspruch 10,
**dadurch gekennzeichnet,**
**dass** der andere Hebel (23, 24) an der Gewindespindel (121) längs beweglich angeordnet ist.

12. Gasarmatur nach Anspruch 10,
**dadurch gekennzeichnet,**
**dass** die Gewindespindel (121) einen Motor (130) aufweist.

13. Gasarmatur nach einem der voranstehenden Ansprüche,
**dadurch gekennzeichnet,**
**dass** das Stellglied (10) als im Stellgliedgehäuse (2) verschiebliche Hülse ausgebildet ist.

14. Gasarmatur nach einem der voranstehenden Ansprüche,
**dadurch gekennzeichnet,**
**dass** das Stellglied (10) mittig eine Achse (27) zur Anbindung des mindestens einen Hebels (23, 24) aufweist.
